# EUROPEAN PATENT SPECIFICATION

(11) **EP 1 750 069 B1**
(45) Date of publication and mention of the grant of the patent: **13.02.2013**
(21) Application number: 05107262.7
(22) Date of filing: 05.08.2005
(51) Int. Cl.: F24H 1/43

(54) **Heat exchanger and methods of producing the same**
Wärmetauscher und dessen Herstellungsmethode
Echangeur de chaleur et son procédé de production

(43) Date of publication of application: 07.02.2007
(73) Proprietor: ELBI International S.p.A., 10129 Torino (IT)
(72) Inventor: Cannas, Christian, 23826, Mandello del Lario (Lecco) (IT)
(74) Representative: Quinterno, Giuseppe

(56) References cited:
- EP-A- 0 758 731
- WO-A-2004/090434
- WO-A-2005/028966

## Description

The present invention relates to a heat exchanger.

More specifically, the present invention relates to a heat exchanger for a gas boiler for producing hot water.

A gas boiler for producing hot water normally comprises a gas burner, and at least one heat exchanger through which combustion fumes and water flow. Some types of gas boilers, known as condensation boilers, condense the steam in the combustion fumes and transfer the latent heat in the fumes to the water. Condensation boilers are further divided into a first type, equipped with a first exchanger close to the burner, and a second exchanger for simply condensing the fumes; and a second type, equipped with only one heat exchanger which provides solely for thermal exchange along a first portion, and for both thermal exchange and fume condensation along a second portion.

International patent application WO 2004/090434 discloses a condensation or dual-function exchanger of the above type, which comprises a casing extending along a first axis and through which combustion fumes flow; a tube along which water flows, and which is housed inside said casing, and coils about the first axis to form a helix comprising a succession of turns; and deflecting means for directing the fumes between successive turns of a first helix portion in a first direction and between successive turns of a second helix portion in a second direction opposite to the first direction;

Tubes are often finned and/or provided with walls having asymmetric cross-sections so as to increase the heat exchange between water and fumes. However, in a heat exchanger of the above type, even though fins and/or particularly shaped walls may increase the heat exchange when fumes flow in a first direction between adjacent turns, the same fins and/or particularly shaped walls may disfavour heat exchange when fumes flow in a second direction opposite to first direction.

It is an object of the present invention to provide a heat exchanger for a gas boiler for producing hot water, which is extremely affective in terms of heat exchange and overcome the aforementioned drawback.

According to the present invention, there is provided a heat exchanger characterised in that the tube forming the turns of said first helix portion has a first cross section, and the tube forming the turns of the second helix portion has a second cross section equal in shape and dimensions to the first cross section, and is oriented opposite to the first cross section.

In this way, the heat exchange can be optimised according to the directions of the fumes between turns.

The present invention also relates to a method of producing a heat exchanger.

According to the present invention, there is provided a method of producing a heat exchanger, as claimed in Claim 6.

A number of non-limiting embodiments of the present invention will be described by way of example with reference to the accompanying drawings, in which:
Figure 1 shows a schematic front view, with parts in section and parts removed for clarity, of a gas boiler equipped with a heat exchanger in accordance with the present invention;
Figure 2 shows a larger-scale section of a detail of the Figure 1 heat exchanger;
Figure 3 shows a view in perspective of a finned tube used to produce the Figure 1 exchanger;
Figure 4 shows in perspective the Figure 3 tube partly machined;
Figure 5 shows in perspective finned tube sections used to produce the figure 1 heat exchanger; and
Figure 6 shows in perspective the tube sections of figure 5 in a united configuration.

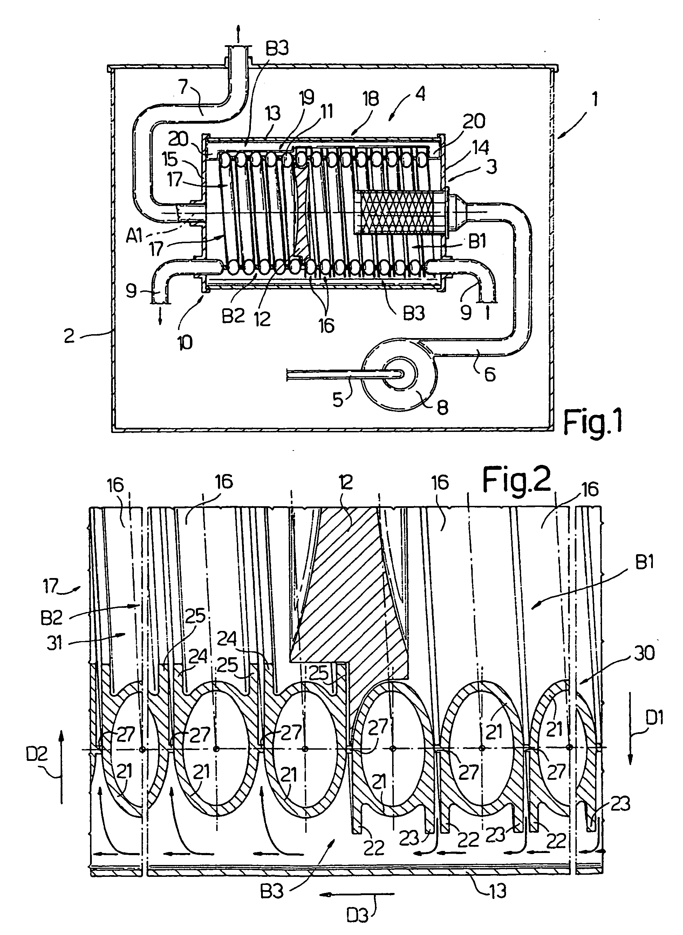

Number 1 in Figure 1 indicates as a whole a gas boiler. Boiler 1 is a wall-mounted condensation boiler, i.e. in which the vapour in the combustion fumes is condensed, and comprises an outer structure 2 in which are housed a burner 3; a heat exchanger 4; a gas supply conduit 5; a pipe 6 for supplying an air-gas mixture to burner 3; a combustion gas exhaust pipe 7; a fan 8 connected to supply pipe 6, and which performs the dual function of supplying the air-gas mixture to burner 3, and expelling the combustion fumes; and a water circuit 9. Burner 3 is connected to pipe 6, is cylindrical in shape, and comprises a lateral wall with holes (not shown) for emitting the air-gas mixture and feeding the flame. Burner 3 is housed inside exchanger 4, which, in fact, also acts as a combustion chamber. Heat exchanger 4 is substantially cylindrical in shape, extends along a substantially horizontal axis A1, and comprises a casing 10, through which the combustion products flow; a finned tube 11, along which water flows; and a disk 12 for directing the fumes along a given path inside exchanger 4. Casing 10 comprises a cylindrical lateral wall 13 about axis A1; an annular wall 14 connected to lateral wall 13, and to burner 3; and an annular wall 15 connected to lateral wall 13, and to exhaust pipe 7. Burner 3 extends, coaxially with exchanger 4, inside of exchanger 4 for a given length. Tube 11 coils about axis A1 to form a succession of adjacent turns 16 forming a helix 17. Each turn 16 is located close to lateral wall 13, whereas helix 17 two opposite ends with known fittings (not shown) for connecting tube 11 to water circuit 9 outside exchanger 4. Disk 12 has a lateral rim so shaped so as to engage turns 16 and to screw into helix 17 in a position substantially perpendicular to axis A1.

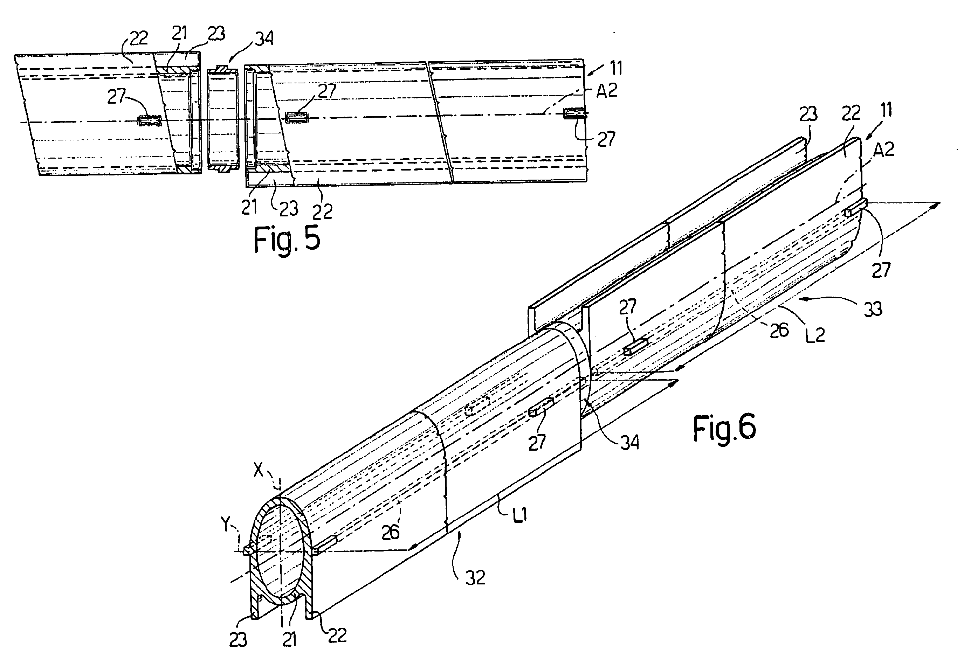

Exchanger 4 comprises three spacers 18 for keeping turns 16 a given distance from lateral wall 13. As shown more clearly in Figure 5, each spacer 18 comprises a straight portion 19 parallel to axis A1, and from which project two fingers 20 for clamping the helix 17.

As best shown in figure 2, helix 17, disk 12, and spacers 18 define, inside casing 10, a region B1 housing burner 3; a region B2 communicating directly with exhaust pipe 7; and three regions B3, each extending between two spacers 18, helix 17, and lateral wall 13. Combustion of the air-gas mixture takes place in region B1; and the resulting fumes, being prevented by disk 12 from flowing directly to region B2, flow between turns 16, in a direction D1 substantially perpendicular to axis A1 and directed outwardly with reference to axis A1, to regions B3, from which the fumes flow between turns 16 in direction D2 parallel and opposite direction D1 to region B2 and then along exhaust pipe 7. Along regions B3 fumes flow in a direction D3 substantially parallel to axis A1.

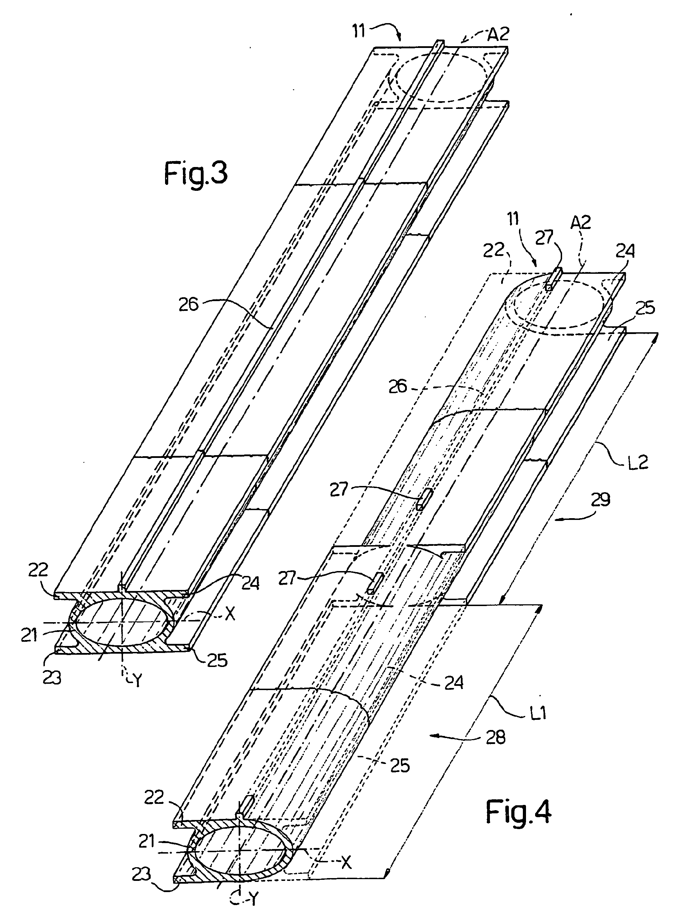

Tube 11 is preferably made of aluminium or aluminium-based alloy. With reference to Figure 3, finned tube 11 is an extruded tube, which extends along an axis A2, and has a wall 21 with an oval cross-section; two fins 22 and 23 on one side of tube 11 and two fins 24 and 25 on the side opposite to side of fins 22 and 23. The cross-section of tube 14 has a major axis X and a minor axis Y. Fins 22, 23, 24 and 25 are all parallel to axis A2 of tube 11 and to major axis X, and are therefore parallel to one another. Fins 22 and 24 are coplanar with each other, and tangent to the outer surface of wall 21. Fins 23 and 25 are arranged so that each fin 25 is coplanar with an opposite fin 23, and are tangent to the outer surface of wall 21. Tube 11 further comprises a longitudinal rib 26 parallel to axis A2 projecting form the outer surface of wall 21 from the intersection of the wall 21 with the minor axis Y.

With reference to figure 4, tube 11 is machined for removing part of the material of tube 11. In detail, rib 26 is partly machined so as to form a succession of teeth 27, preferably equally spaced, along outer surface of wall 21 in a direction parallel to axis A2. Furthermore, fins 22 and 23 are eliminated by machining along a tube section 28 of length L1, whereas fins 24 and 25 are eliminated by machining along a second section 29 of tube 11 of length L2. Then tube 11 is coiled in helix 17 about an axis. This operation actually comprises calendering tube 14, with the minor axis Y of the section of tube 14 maintained substantially parallel to the axis of helix 17 under formation. The three spacers 18 are then clamped on helix 17, which is inserted inside lateral wall 13 of casing 10. Annular walls 14 and 15 are then fitted to the opposite ends of cylindrical wall 13.

When helix 17 is clamped by spacers 18, teeth 27 of one turn 16 abut against wall 21 of the adjacent turn 16 so as to space turns 16 apart and to form gaps defining compulsory fume paths. Tube sections 28 and 29 define along helix 17 two portions 30 and 31: disk 12 is located substantially between portions 30 and 31.

With reference to the Figures 5 and 6 variation, the method for making the heat exchanger 4 comprises the steps of extruding a tube 11 provided only with fins 22 and 23 on the one side of the tube 11 and rib 26, cutting the tube 11 into two tube sections 32 and 33, rotating one tube section 32 with respect to the other tube section 33 of 180° about the longitudinal axis A2 of the tube 11 and further about an axis parallel to axis X, and joining the tube section 32 and 33 with the help of an intermediate connecting member 34. Once the two sections 32 and 33 are joined as shown in Figure 6, sections 32 ad 33 are coiled to form a helix 17 provided with a first helix portion 30 with outwardly directed fins 22 and 23, and a second helix portion 31 provided with inwardly directed fins 22, 23.

According to another variation, tube section 32 and 33 are separately coiled respectively in the first and second helix portions 31 and 32, which are joined together to form helix 17.

The method disclosed with reference to figure 5 and 6 and its variation has the advantage of reducing the material consumption with respect to the method disclosed with reference to Figure 3 and 4.

Even though the embodiments disclosed in the description refer to finned tube, the present invention is not limited to the described embodiments. For example, this invention also applies to a tube without fins and having a cross-section asymmetric with respect to an axis of the same.

## Claims

1. A heat exchanger for a gas boiler for producing hot water; the heat exchanger (4) comprising a casing (10) extending along a first axis (A1) and through which combustion fumes flow; a tube (11) along which water flows, and which is housed inside said casing (10), and coils about the first axis (A1) to form a helix (17) comprising a succession of turns (16); and deflecting means (12) for directing the fumes between successive turns (16) of a first helix portion (30) in a first direction (D1) and between successive turns (16) of a second helix portion (31) in a second direction (D2) opposite to the first direction (D1); said heat exchanger (4) being **characterised in that** the tube (11) forming the turns (16) of said first helix portion (30) has a first cross section, and the tube (11) forming the turns (16) of the second helix portion (31) has a second cross section equal in shape and dimensions to the first cross section, and is oriented opposite to the first cross section.

2. A heat exchanger as claimed in claim 1, **characterized in that** said first helix portion (30) and said second helix (31) portion being made from the same tube (11).

3. A heat exchanger as claimed in Claim 1 or 2, **characterized in that** said tube (11) is a finned tube.

4. A heat exchanger as claimed in Claim 3, **characterized in that** the turns (16) of the first helix portion (30) comprises two first fin (22, 23) extending outwardly and the turns (16) of the helix second portion (31) are provided with two second fins (22, 23; 24, 25) extending inwardly with respect to said helix (17).

5. A heat exchanger as claimed in any one of the foregoing Claims, **characterized in that** each turns (16) is provided with integrally made teeth (27) protruding from the wall (21) of the tube (11) so as to space said turns (16) apart and forming gaps between adjacent turns (16).

6. A method of producing the heat exchanger (4) claimed in any one of Claims 1 to 5, **characterized by** coiling about an axis a first and second tube sections (28, 29; 32, 33) of said tube (11) so as to form respectively said first and second helix portions (30, 31).

7. A method according to Claim 6, **characterised in that** said tube (11) is extruded and extend along a second axis (A2).

8. A method according to Claims 6 or 7, **characterised in that** said tube (11) is a finned tube

9. Method according to Claim 7, **characterised by** extruding said tube (11) with a cross-section having at least an axis of asymmetry (Y); cutting said tube (11) into a first tube section (32) and into a second tube section (33); rotating said first tube section (32) with respect the second tube section (33) of an angle of 180° about said second axis (A2) and of an angle of 180° about an axis (X) perpendicular to the second axis (A2) and to said axis of asymmetry (Y); keeping said axis of asymmetry (Y) substantially parallel to the axis of the helix (17) when coiling. comprising fins (22, 23, 24, 25) extending along the second axis (A2 ); the fins defining at least two axes (X, Y) of symmetry of the tube cross section; the method comprising the steps of machining some of the fins (22, 23, 24, 25) along a portion of length (L1) so as to define said first tube section (28) and machining the other fins (22, 23, 24, 25) along a portion of length (L2) so as to define said second tube section (29) before coiling said tube (11).

10. Method according to Claim 9, **characterized by** joining said first and second tube sections (32, 33) before coiling to form said helix (17).

11. Method according to Claim 9, **characterized by** coiling separately said first and second tube sections (32, 33) so as to form respectively said first and second helix portions (30, 31) and joining said first and second helix portions (30, 31) to form said helix (17).

## Patentansprüche

1. Wärmetauscher für einen Gaskessel zum Erzeugen von Warmwasser;
wobei der Wärmetauscher (4) umfasst:
ein Gehäuse (10), welches sich entlang einer ersten Achse (A1) erstreckt und durch welches Verbrennungsrauch strömt;
ein Rohr (11) entlang welches Wasser strömt und welches innerhalb des Gehäuses (10) aufgenommen ist, und Spulen um die erste Achse (A1) herum, um eine Helix (17) zu bilden, welche eine Aufeinanderfolge von Windungen (16) umfasst; und
Ablenkmittel (12) zum Lenken des Rauchs zwischen aufeinanderfolgenden Windungen (16) eines ersten Helixabschnitts (30) in eine erste Richtung (D1) und zwischen aufeinanderfolgenden Windungen (16) eines zweiten Helixabschnitts (31) in eine zweite Richtung (D2), die der ersten Richtung (D1) entgegengesetzt ist;
wobei der Wärmetauscher (4) **dadurch gekennzeichnet ist, dass** das Rohr (11), welches die Windungen (16) des ersten Helixabschnitts (30) bildet, einen ersten Querschnitt aufweist, und das Rohr (11), welches die Windungen (16) des zweiten Helixabschnitts (31) bildet, einen zweiten Querschnitt aufweist, welcher in Form und Abmessungen dem ersten Querschnitt gleich ist und dem ersten Querschnitt entgegengesetzt gerichtet ist.

2. Wärmetauscher nach Anspruch 1,
**dadurch gekennzeichnet, dass** der erste Helixabschnitt (30) und der zweite Helixabschnitt (31) aus demselben Rohr (11) hergestellt sind.

3. Wärmetauscher nach Anspruch 1 oder 2,
**dadurch gekennzeichnet, dass** das Rohr (11) ein Rippenrohr ist.

4. Wärmetauscher nach Anspruch 3,
**dadurch gekennzeichnet, dass** die Windungen (16) des ersten Helixabschnitts (30) zwei erste Rippen (22, 23) umfasst, welche sich nach Außen erstrecken, und die Windungen (16) des zweite Helixabschnitts (31) mit zwei zweiten Rippen (22, 23; 24, 25) bereitgestellt sind, welche sich bezüglich der Helix (17) nach Innen erstrecken.

5. Wärmetauscher nach einem der vorhergehenden Ansprüche,
**dadurch gekennzeichnet, dass** jede Windung (16) mit integral gebildeten Zähnen (27) bereitgestellt ist, welche von der Wand (21) des Rohrs (11) vorstehen, um die Windungen (16) voneinander zu beabstanden und Lücken zwischen benachbarten Windungen (16) zu bilden.

6. Verfahren zum Herstellen des Wärmetauschers (4) nach einem der Ansprüche 1 bis 5,
**gekennzeichnet durch** Verdrehen eines ersten und eines zweiten Rohrabschnitts (28, 29; 32, 33) des Rohrs (11) um eine Achse, um den ersten Helixabschnitt (30) beziehungsweise den zweite Helixabschnitt (31) zu bilden.

7. Verfahren nach Anspruch 6,
**dadurch gekennzeichnet, dass** das Rohr (11) extrudiert wird und sich entlang einer zweiten Achse (A2) erstreckt.

8. Verfahren nach Anspruch 6 oder 7,
**dadurch gekennzeichnet, dass** das Rohr (11) ein Rippenrohr ist, welches Rippen (22, 23, 24, 25) umfasst, die sich entlang der zweiten Achse (A2) erstrecken;
wobei die Rippen wenigstens zwei Symmetrieachsen (X, Y) des Rohrquerschnitts definieren;
wobei das Verfahren die Schritte umfasst:
Bearbeiten von einigen der Rippen (22, 23, 24, 25) entlang eines Abschnitts einer Länge (L1), um den ersten Rohrabschnitt (28) zu definieren, und
Bearbeiten der anderen Rippen (22, 23, 24, 25) entlang eines Abschnitts einer Länge (L2), um den zweiten Rohrabschnitt (29) zu definieren, bevor das Rohr (11) verdreht wird.

9. Verfahren nach Anspruch 7,
**gekennzeichnet durch** Extrudieren des Rohrs (11) mit einem Querschnitt, welcher wenigstens eine Symmetrieachse (Y) aufweist; Schneiden des Rohrs (11) in einen ersten Rohrabschnitt (32) und in einen zweiten Rohrabschnitt (33);
Rotieren des ersten Rohrabschnitts (32) bezüglich des zweiten Rohrabschnitts (33) um einen Winkel von 180° um die zweite Achse (A2) und um einen Winkel von 180° um eine zur zweiten Achse (A2) und zur Symmetrieachse (Y) orthogonale Achse (X);
Halten der Symmetrieachse (Y) im Wesentlichen parallel zur Achse der Helix (17), während des Verdrehens.

10. Verfahren nach Anspruch 9,
**gekennzeichnet durch** Verbinden des ersten und des zweiten Rohrabschnitts (32, 33) vor dem Verdrehen, um die Helix (17) zu bilden.

11. Verfahren nach Anspruch 9,
**gekennzeichnet durch** getrenntes Verdrehen des ersten und des zweiten Rohrabschnitts (32, 33), um den ersten beziehungsweise den zweiten Helixabschnitt (30, 31) zu bilden, und Verbinden des ersten und des zweiten Helixabschnitts (30, 31), um die Helix (17) zu bilden.

## Revendications

1. Echangeur de chaleur pour chaudière à gaz destinée à produire de l'eau chaude, l'échangeur de chaleur (4) comprenant un carter (10) s'étendant le long d'un premier axe (A1) et à travers lequel circulent des émanations de combustion ; un tube (11) le long duquel circule de l'eau, et qui est logé à l'intérieur dudit carter (10), et qui s'enroule autour du premier axe (A1) pour former un serpentin (17) comprenant une succession de spires (16) ; et un moyen de déviation (12) pour diriger les émanations entre les spires successives (16) d'une première partie de serpentin (30) dans une première direction (D1) et entre les spires successives (16) d'une deuxième partie de serpentin (31) dans une seconde direction (D2) opposée à la première direction (D1) ; ledit échangeur de chaleur (4) étant **caractérisé en ce que** le tube (11) formant les spires (16) de ladite première partie de serpentin (30) a une première section transversale, et le tube (11) formant les spires (16) de la deuxième partie de serpentin (31) a une deuxième section transversale qui est de forme et de dimensions égales à la première section transversale, et qui est orientée à l'opposé de la première section transversale.

2. Echangeur de chaleur selon la revendication 1, **caractérisé en ce que** ladite première partie de serpentin (30) et ladite deuxième partie de serpentin (31) sont faites à partir du même tube (11).

3. Echangeur de chaleur selon la revendication 1 ou 2, **caractérisé en ce que** ledit tube (11) est un tube à ailettes.

4. Echangeur de chaleur selon la revendication 3, **caractérisé en ce que** les spires (16) de la première partie de serpentin (30) comprennent deux premières ailettes (22, 23) s'étendant vers l'extérieur et les spires (16) de la deuxième partie de serpentin (31) sont pourvues de deux deuxièmes ailettes (22, 23 ; 24, 25) s'étendant vers l'intérieur par rapport audit serpentin (17).

5. Echangeur de chaleur selon l'une quelconque des revendications précédentes, **caractérisé en ce que** chaque spire (16) est pourvue de dents intégrées (27) faisant saillie depuis la paroi (21) du tube (11) afin d'écarter lesdites spires (16) les unes des autres et formant des espaces entre les spires (16) adjacentes.

6. Procédé de fabrication de l'échangeur de chaleur (4) de l'une quelconque des revendications 1 à 5, **caractérisé par** le fait d'enrouler autour d'un axe une première et une deuxième section de tube (28, 29 ; 32, 33) dudit tube (11) afin de former respectivement lesdites première et deuxième parties de serpentin (30, 31).

7. Procédé selon la revendication 6, **caractérisé en ce que** ledit tube (11) est extrudé et s'étend le long d'un deuxième axe (A2).

8. Procédé selon la revendication 6 ou 7, **caractérisé en ce que** ledit tube (11) est un tube à ailettes qui comprend des ailettes (22, 23, 24, 25) s'étendant le long du deuxième axe (A2) ; les ailettes définissant au moins deux axes (X, Y) de symétrie de la section transversale du tube ; le procédé comprenant les étapes consistant à usiner certaines des ailettes (22, 23, 24, 25) le long d'une partie de la longueur (L1) afin de définir ladite première section de tube (28) et à usiner les autres ailettes (22, 23, 24, 25) le long d'une partie de la longueur (L2) afin de définir ladite deuxième section de tube (29) avant d'enrouler ledit tube (11).

9. Procédé selon la revendication 7, **caractérisé par** le fait d'extruder ledit tube (11) avec une section transversale ayant au moins un axe d'asymétrie (Y) ; couper ledit tube (11) pour obtenir une première section de tube (32) et une deuxième section de tube (33) ; faire tourner ladite première section de tube (32) par rapport à la deuxième section de tube (33) d'un angle de 180° autour dudit deuxième axe (A2) et d'un angle de 180° autour d'un axe (X) perpendiculaire au deuxième axe (A2) et audit axe d'asymétrie (Y) ; maintenir ledit axe d'asymétrie (Y) substantiellement parallèle à l'axe du serpentin (17) au cours de l'enroulement.

10. Procédé selon la revendication 9, **caractérisé par** le fait de relier lesdites première et deuxième sections de tube (32, 33) avant l'enroulement pour former ledit serpentin (17).

11. Procédé selon la revendication 9, **caractérisé par** le fait d'enrouler séparément lesdites première et deuxième sections de tube (32, 33) de façon à former respectivement lesdites première et deuxième parties de serpentin (30, 31) et de relier lesdites première et deuxième parties de serpentin (30, 31) pour former ledit serpentin (17).
